# EUROPEAN PATENT SPECIFICATION

(11) **EP 2 203 530 B1**
(45) Date of publication and mention of the grant of the patent: **12.03.2014**
(21) Application number: 08806796.2
(22) Date of filing: 24.10.2008
(51) Int. Cl.: C09D 11/10

(54) **A RADIATION CURABLE PRINTING INK**
STRAHLENHÄRTBARE DRUCKFARBE
ENCRE D'IMPRESSION DURCISSABLE PAR RAYONNEMENT

(30) Priority: 26.10.2007 GB 0721080
(43) Date of publication of application: 07.07.2010
(73) Proprietor: Sericol Limited, Pysons Road Industrial Estate Broadstairs Kent CT10 2LE (GB)
(72) Inventor: GOULD, Nigel, Kent CT10 2LE (GB); WARD, Jeremy, Kent CT10 2LE (GB)
(74) Representative: Gillard, Richard Edward
(86) International application number: PCT/GB2008/050989
(87) International publication number: WO 2009/053751

(56) References cited:
- EP-A- 0 555 069
- EP-A- 1 642 943
- WO-A-03/010249
- WO-A-2008/093071

## Description

This invention relates to a printing ink and in particular to an ink for ink-jet printing which is cured by irradiation.

In ink-jet printing, minute droplets of black, white or coloured ink are ejected in a controlled manner from one or more reservoirs or printing heads through narrow nozzles on to a substrate which is moving relative to the reservoirs. The ejected ink forms an image on the substrate. For high-speed printing, the inks must flow rapidly from the printing heads, and, to ensure that this happens, they must have in use a low viscosity, typically below 200 mPas at 25°C although in most applications the viscosity should be below 100 mPas or below 50 mPas, and often below 25 mPas. Typically, when ejected through the nozzles, the ink has a viscosity of less than 25 mPas, preferably 5-15 mPas and ideally 10.5 mPas at the jetting temperature which is often elevated to about 40°C (the ink might have a much higher viscosity at ambient temperature). The inks must also be resistant to drying or crusting in the reservoirs or nozzles. For these reasons, ink-jet inks for application at or near ambient temperatures are commonly formulated to contain a large proportion of a mobile liquid vehicle or solvent. In one common type of ink-jet ink this liquid is water - see for example the paper by Henry R. Kang in the Journal of Imaging Science, 35(3), pp. 179-188 (1991). In those systems, great effort must be made to ensure the inks do not dry in the head due to water evaporation. In another common type the liquid is a low-boiling solvent or mixture of solvents - see, for example, EP 0 314 403 and EP 0 424 714. Unfortunately, ink-jet inks that include a large proportion of water or solvent cannot be handled after printing until the inks have dried, either by evaporation of the solvent or its absorption into the substrate. This drying process is often slow and in many cases (for example, when printing on to a heat-sensitive substrate such as paper) cannot be accelerated.

Another type of ink-jet ink contains unsaturated organic compounds, termed monomers, which polymerise by irradiation, commonly with ultraviolet light, in the presence of a photoinitiator. This type of ink has the advantage that it is not necessary to evaporate the liquid phase to dry the print; instead the print is exposed to radiation to cure or harden it, a process which is more rapid than evaporation of solvent at moderate temperatures.

Monomers suitable for use in radiation-curable ink-jet inks are well known and include (meth)acrylate monomers, vinyl monomers, vinyl ether monomers and styrene or substituted styrene monomers. Although these monomers are generally liquid at ambient temperature, radiation-curable ink-jet inks can comprise monomers that are solid at ambient temperature, provided that the solid monomer is solubilised in the final ink. One well-known example of such a monomer is N-vinyl caprolactam (NVC). NVC has a melting point of 34°C but can be solubilised in a liquid monomer such as a (meth)acrylate, for example phenoxyethyl acrylate (PEA), in order to provide a liquid ink-jet ink. Monomers that are solid at ambient temperature can precipitate from ink-jet inks during printing, however. Although this precipitation does not usually occur at the print head nozzles because the nozzles are typically heated, precipitation of solid monomers may cause blockage of print head filters, which are not heated. There is therefore a requirement for an ink-jet ink comprising a solid monomer that overcomes the above disadvantage.

WO 2003/010249 discloses ink compositions comprising a colourant, a vehicle and a fluorochemical surfactant. Methods of coating a substrate by printing the ink composition onto a substrate are also disclosed. Substrates coated with an ink composition are further disclosed.

EP 1 642 943 discloses a method of making an ink jettable fluid composition, comprising the steps of: (a) selecting a solvent component to incorporate into the composition, wherein the solvent component comprises solvent having a surface tension and wherein said solvent is selected for incorporation into the composition from information comprising a solvent characteristic indicative of the solvent surface tension; and (b) incorporating from 1 to 15 weight percent of the solvent into a composition comprising said solvent, one or more oligo/resins, and a radiation curable, reactive diluent having a surface tension, wherein the surface tension of the solvent is no more than about the surface tension of the radiation curable reactive diluent.

EP 0 555 069 discloses radiation-curable compositions including a free radically polymerizable monomer or prepolymer and a different monomer containing an N-vinyl group, said different monomer being a solid at ambient temperature.

Accordingly, the present invention provides an ink-jet ink comprising:
i) at least 20% by weight of a mixture of at least a first radiation curable monomer and a second radiation curable monomer, wherein both the first radiation curable monomer and the second radiation curable monomer have a melting point of at least 25°C, and wherein the mixture of the first and second radiation curable monomers has a melting point of 20°C or lower;
ii) at least one radical photoinitiator;
iii) at least one colouring agent; and
wherein said first and second radiation curable monomers are selected from N-vinyl amides

The ink-jet ink of the present invention dries primarily by curing, i.e. by the polymerisation of the monomers present, as discussed hereinabove, and hence is a curable ink. The ink does not, therefore, require the presence of water or a volatile organic solvent to effect drying of the ink, although the presence of such components may be tolerated. Preferably, however, the ink-jet ink of the present invention is substantially free of water and volatile organic solvents.

The inks of the present invention comprise monomers that have melting points of at least 25°C, but which combine to form a monomer mixture that has a melting point of 20°C or lower. Although not wishing to be bound by theory, it is believed that the use of such a mixture in an ink-jet ink will prevent the solid monomer from precipitating out of the ink at ambient temperature and therefore prevent blocking of filters in the print head during printing. Furthermore, the inks of the present invention do not require the presence of a liquid monomer such as a (meth)acrylate in order to solubilise the solid monomer. The inks of the present invention therefore provide the ink-jet ink formulator with more formulation freedom.

The first and second radiation curable monomers used in the inks of the present invention preferably have melting points of at least 25°C, preferably 28°C, most preferably at least 30°C. The mixture of the first and second radiation curable monomers preferably has a melting point of 20°C or lower, preferably 15°C or lower, most preferably about 10°C or lower. The melting points of monomers are well-defined and can be determined routinely using the capillary method, for example using a capillary melting point apparatus from Bamstead International's MEL-TEMP^{®} range.

The monomer mixture used in the inks of the invention may comprise more than two monomers that have melting points of at least 25°C, provided that mixture of the more than two monomers has a melting point of 20°C or lower. Preferably, however, the mixture of at least a first radiation curable monomer and a second radiation curable monomer is a binary mixture consisting of a first radiation curable monomer and a second radiation curable monomer.

The first and second radiation curable monomers are selected from N-vinyl amides. Preferred N-vinyl amides are NVC, N-vinyl piperidone (NVPip) and divinyl ethylene urea (also known as N,N'-divinyl-2-imidazolidone)

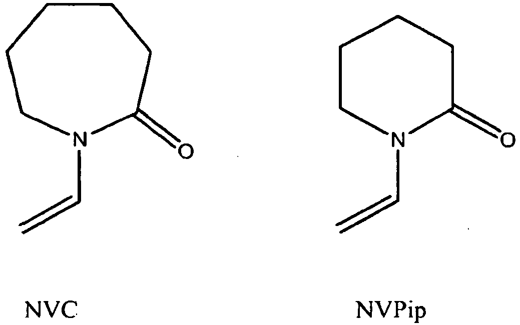

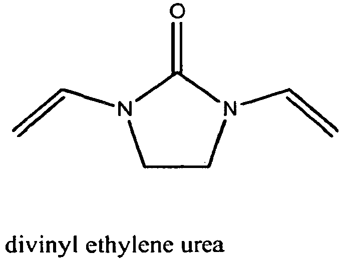

Particularly preferred mixtures of a first radiation curable monomer and a second radiation curable monomer comprise NVC and NVPip, or NVC and divinyl ethylene urea.

The ratio of first radiation curable monomer to second radiation curable monomer used in the inks of the invention varies depending on the particular monomers used but is typically 10:90 to 90:10 parts by weight, preferably 20:80 to 80:20, most preferably 25:75 to 75:25. The ratio of first radiation curable monomer to second radiation curable monomer is preferably chosen in order to minimise the melting point of the resulting mixture. Compositions of at least two solid compounds that are combined at a specific ratio so that the melting point of the composition is at the minimum value for that particular combination of compounds and below the melting points of the individual components are known as eutectic compositions. In a preferred embodiment of the invention, the mixture of a first radiation curable monomer and a second radiation curable monomer is a eutectic composition. It should be noted that it is not essential for the mixture used in the inks of the invention to have the ideal eutectic composition, however, since it is not essential for the melting point of the monomer mixture to be at the lowest value possible. The mixture of a first radiation curable monomer and a second radiation curable monomer should merely have a melting point of 20°C or lower. The person skilled in the art is able to determine whether any particular combination of solid monomers would provide a mixture that has a melting point of 20°C or lower. In particular, the ability to provide a mixture that has a melting point of 20°C or lower can be tested by simply combining the solid monomers and determining the melting point of the mixture.

In one preferred embodiment of the invention, the mixture of at least a first radiation curable monomer and a second radiation curable monomer comprises 10 to 90 wt% NVC and 10 to 90 wt% divinyl ethylene urea based on the total weight of the mixture, preferably 60 to 85 wt% NVC and 15 to 40 wt % divinyl ethylene urea, most preferably about 75 wt% NVC and about 25 wt% divinyl ethylene urea. Preferably the mixture of the first radiation curable monomer and the second radiation curable monomer consists essentially of 10 to 90 wt% NVC and 10 to 90 wt% divinyl ethylene urea based on the total weight of the mixture, preferably 60 to 85 wt% NVC and 15 to 40 wt % divinyl ethylene urea, most preferably about 75 wt% NVC and about 25 wt% divinyl ethylene urea.

In an alternative preferred embodiment of the invention, the mixture of at least a first radiation curable monomer and a second radiation curable monomer comprises 10 to 90 wt% NVC and 10 to 90 wt% NVPip based on the total weight of the mixture, preferably 30 to 80 wt% NVC and 20 to 70 wt % NVPip, most preferably 35 to 70 wt% NVC and 30 to 65 wt% NVPip. The mixture of the first radiation curable monomer and the second radiation curable monomer preferably consists essentially 10 to 90 wt% NVC and 10 to 90 wt% NVPip based on the total weight of the mixture, preferably 30 to 80 wt% NVC and 20 to 70 wt % NVPip, most preferably 35 to 70 wt% NVC and 30 to 65 wt% NVPip.

Although it is not necessary for the inks of the present invention to include a monomer that is liquid at ambient temperatures in order to solubilise the monomers that have melting points of at least 25°C, the inks of the invention can optionally comprise one or more further radiation-curable monofunctional monomers. Such monomers are well-known in the art. By monofunctional is meant that the monomers have only one functional group which takes part in a polymerisation reaction during curing. A preferred example is a (meth)acrylate monomer.

Suitable monofunctional monomers include, phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octa/decyl acrylate (ODA), tridecyl acrylate (TDA), isodecyl acrylate (IDA), lauryl acrylate or mixtures thereof.

A preferred monomer is phenoxyethyl acrylate (PEA):

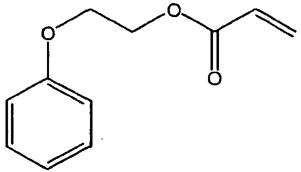

The inks of the invention comprise at least 20% by weight, preferably at least 30% by weight of a mixture of at least a first radiation curable monomer and a second radiation curable monomer, based on the total weight of the ink. When a further monofunctional monomer, e.g. monofunctional (meth)acrylate, is included in the inks of the invention, it is typically present in an amount of 5 to 75 wt%, based on the total weight of the ink, preferably 15 to 50 wt% more preferably 20 to 40 wt%. In this case the mixture of at least a first radiation curable monomer and a second radiation curable monomer is present in an amount of 20 to 90 wt%, based on the total weight of the ink, preferably 30 to 70 wt%.

When the inks of the invention do not include a further monofunctional monomer, the inks preferably comprise at least 50% by weight of the mixture of at least a first radiation curable monomer and a second radiation curable monomer based on the total weight of the ink, more preferably at least 70% by weight.

It is possible to modify further the film properties of the ink-jet inks by inclusion of oligomers or inert resins, such as thermoplastic acrylics, or additional multifunctional monomers.

By "additional multifunctional monomer" is meant a multifunctional monomer in addition to divinyl ethylene urea, when the later is present as the first or second radiation curable monomer. Examples of additional multifunctional monomers which may be included in the ink-jet ink formulation include acrylate monomers such as hexanediol diacrylate, trimethylolpropane triacrylate, pentaerythritol triacrylate, polyethyleneglycol diacrylate, for example, tetraethyleneglycol diacrylate), dipropyleneglycol diacrylate, tri(propylene glycol) triacrylate, neopentylglycol diacrylate, bis(pentaerythritol) hexa-acrylate, and the acrylate esters of ethoxylated or propoxylated glycols and polyols, for example, propoxylated neopentyl glycol diacrylate, ethoxylated trimethylolpropane triacrylate, and mixtures thereof. Particularly preferred are difunctional acrylates with a molecular weight greater than 200.

Further suitable additional multifunctional monomers include esters of methacrylic acid (i.e. methacrylates), such as hexanediol dimethactylate, trimethylolpropane trimethacrylate, triethyleneglycol dimethacrylate, diethyleneglycol dimethacrylate, ethyleneglycol dimethacrylate, 1,4-butanediol dimethacrylate.

Mixtures of (meth)acrylates may also be used.

Where additional multifunctional monomer is included, the additional multifunctional monomer is present in an amount of no more than 15 wt%, preferably no more than 10 wt%, more preferably no more than 7 wt%, more preferably no more than 5 wt% and most preferably no more than 2 wt% based on the total weight of the ink. The multifunctional monomer which is limited in amount may be any additional multifunctional monomer which could be involved in the curing reaction, such as a multifunctional (meth)acrylate monomer or a multifunctional vinyl ether, but not including divinyl ethylene urea, when this is present as the first or second radiation curable monomer.

In an embodiment the ink is substantially free of oligomeric and polymeric material meaning that only trace amounts will be present. Where oligomeric or polymeric material is included, the oligomeric and polymeric material is present in an amount of no more than 20 wt%, more preferably no more than 10 wt%, most preferably no more than 5 wt% based on the total weight of the ink. Oligomeric and polymeric materials (e.g. acrylate oligomers and inert thermoplastic resins, respectively) are known in the art and typically have a molecular weight above 500, more preferably above 1000. The upper limit is less relevant, but if preferably less than 10,000, more preferably less than 5,000.

In addition to the monomers described above, the compositions include a photoinitiator, which, under irradiation by, for example, ultraviolet light, initiates the polymerisation of the monomers. Preferred are photoinitiators which produce free radicals on irradiation (free radical photoinitiators) such as, for example, benzophenone, 1-hydroxycyclohexyl phenyl ketone, 2-benzyl-2-dimethylamino-(4-morpholinophenyl)butan-1-one, benzil dimethylketal, bis(2,6-dimethylbenzoyl)-2,4,4-trimethylpentylphosphine oxide or mixtures thereof. Such photoinitiators are known and commercially available such as, for example, under the trade names Irgacure, Darocur (from Ciba) and Lucerin (from BASF).

Preferably the photoinitiator is present from 1 to 20% by weight, preferably from 4 to 10% by weight, of the ink.

The ink-jet ink of the present invention also includes a colouring agent, which may be either dissolved or dispersed in the liquid medium of the ink. Preferably the colouring agent is a dispersible pigment, of the types known in the art and commercially available such as, for example, under the trade-names Paliotol (available from BASF plc), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

The total proportion of pigment present is preferably from 0.5 to 15% by weight, more preferably from 1 to 5% by weight.

Although the ink of the present invention cures by a free radical mechanism, the ink of the present invention may also be a so-called "hybrid" ink which cures by a radical and cationic mechanism. The ink-jet ink of the present invention, in one embodiment, therefore further comprises at least one cationically curable monomer, such as a vinyl ether, and at least one cationic photoinitiator, such as an iodonium or sulfonium salt, e.g. diphenyliodonium fluoride and triphenylsulfonium hexafluophosphate. Suitable cationic photoinitiators include the Union Carbide UV1-69-series, Deuteron UV 1240 and IJY2257, Ciba Irgacure 250 and CG1 552, 1GM-C440, Rhodia 2047 and UV9380c.

Other components of types known in the art may be present in the ink to improve the properties or performance. These components may be, for example, surfactants, defoamers, dispersants, synergists for the photoinitiator, stabilisers against deterioration by heat or light, reodorants, flow or slip aids, biocides and identifying tracers.

The present invention also provides a method of ink-jet printing using the above-described ink and a substrate having the cured ink thereon. Suitable substrates include styrene, PolyCarb (a polycarbonate), BannerPVC (a PVC) and VIVAK (a polyethylene terephthalate glycol modified). The ink of the present invention is preferably cured by ultraviolet irradiation and is suitable for application by ink-jet printing. The present invention further provides an ink-jet ink cartridge containing the ink-jet ink as defined herein. The cartridge comprises an ink container and an ink delivery port which is suitable for connection with an ink-jet printer.

The ink-jet ink exhibits a desirable low viscosity (less than 200 mPas, preferably less than 100 mPas more preferably less than 50 mPas and most preferably less than 25 mPas at 25°C). Viscosity may be measured using a digital Brookfield viscometer fitted with a thermostatically controlled cup and spindle arrangement, such as model LDV1+ with the ULA spindle and cup arrangement and a spindle speed of 20 rpm.

(Meth)acrylate is intended herein to have its standard meaning, i.e. acrylate and/or methacrylate. Mono and multifunctional are also intended to have their standard meanings, i.e. one and two or more groups, respectively, which take part in the polymerisation reaction on curing. "Consisting essentially of" is taken to mean that in addition to those components which are stated to be mandatory, other components may also be present in the composition, provided that the essential characteristics of the composition are not materially affected by their presence.

The mixture of at least a first radiation curable monomer and a second radiation curable monomer can be prepared by melting the solid monomers together and stirring.

The inks of the invention may be prepared by known methods such as, for example, stirring with a high-speed water-cooled stirrer, or milling on a horizontal bead-mill.

### Examples

The invention will now be described, by way of example, with reference to the following examples (parts given are by weight).

Inks having the following compositions are prepared:

| Component | Example 1 | Comparative Example |
|---|---|---|
| Cyan pigment dispersion | 4.53 | 4.53 |
| N-vinyl caprolactam/divinyl ethylene urea mixture (75:25 parts by weight) | 51.86 | - |
| N-vinyl caprolactam | - | 51.86 |
| Phenoxyethyl acrylate | 30.0 | 30.0 |
| UV stabiliser | 0.8 | 0.8 |
| Irgacure 184 | 1.88 | 1.88 |
| Acyl phospine oxide | 8.01 | 8.01 |
| Benzophenone | 2.82 | 2.82 |
| Silicone wetting agent | 0.1 | 0.1 |

The inks are stored at room temperature and observed for crystal growth.

Less precipitation of N-vinyl caprolactam is observed from the ink of Example 1 than from the ink of the Comparative Example.

## Claims

1. An ink-jet ink comprising:
a. at least 20% by weight of a mixture of at least a first radiation curable monomer and a second radiation curable monomer, wherein both the first radiation curable monomer and the second radiation curable monomer have a melting point of at least 25°C, and wherein the mixture of the first and second radiation curable monomers has a melting point of 20°C or lower;
b. at least one photoinitiator;
c. at least one colouring agent; and
wherein said first and second radiation curable monomers are selected from N-vinyl amides.

2. The ink-jet ink according to claim 1 wherein the first and second radiation curable monomers both have a melting point of 28°C or higher, preferably 30°C or higher.

3. The ink-jet ink according to any preceding claim wherein said mixture has a melting point of 15°C or lower.

4. The ink-jet ink according to any preceding claim wherein the ratio of first radiation curable monomer to second radiation curable monomer is 10:90 to 90:10 parts by weight, preferably 20:80 to 80:20, most preferably 25:75 to 75:25.

5. The ink-jet ink according to any preceding claim, wherein said N-vinyl amides are N-vinyl caprolactam (NVC), N-vinyl piperidone (NVPip) and divinyl ethylene urea.

6. The ink-jet ink according to any preceding claim wherein said mixture comprises NVC and NVPip, or NVC and divinyl ethylene urea.

7. The ink-jet ink according to claim 6 wherein said mixture comprises 10 to 90 wt% NVC and 10 to 90 wt% divinyl ethylene urea based on the total weight of the mixture, preferably 60 to 85 wt% NVC and 15 to 40 wt % divinyl ethylene urea, most preferably about 75 wt% NVC and about 25 wt% divinyl ethylene urea.

8. The ink-jet ink according to claim 6 wherein said mixture comprises 10 to 90 wt% NVC and 10 to 90 wt% NVPip based on the total weight of the mixture, preferably 30 to 80 wt% NVC and 20 to 70 wt % NVPip, most preferably 35 to 70 wt% NVC and 30 to 65 wt% NVPip.

9. The ink-jet ink according to any preceding claim wherein the ink comprises at least 50% by weight of said mixture of at least a first radiation curable monomer and a second radiation curable monomer based on the total weight of the ink, more preferably at least 70% by weight.

10. The ink-jet ink according to any one of claims 1 to 10 comprising at least one further radiation-curable monofunctional monomer, preferably wherein the ink comprises 5 to 75 wt% of the further radiation-curable monofunctional monomer and 20 to 90 wt% of the mixture of at least a first radiation curable monomer and a second radiation curable monomer, based on the total weight of the ink.

11. The ink-jet ink according to claim 10 wherein said further radiation-curable monofunctional monomer is a (meth)acrylate monomer, preferably wherein said further monofunctional (meth)acrylate monomer is selected from phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octa/decyl acrylate (ODA), tridecyl acrylate (TDA), isodecyl acrylate (IDA), lauryl acrylate or mixtures thereof, preferably PEA.

12. The ink-jet ink according to any preceding claim wherein the ink is substantially free of water and volatile organic solvents.

13. A method of ink-jet printing, comprising printing the ink-jet ink as claimed in any preceding claim on to a substrate and curing the ink.

14. A substrate having the ink-jet ink as claimed in any one of claims 1 to 12 printed thereon.

15. An ink-jet cartridge comprising an ink as claimed in any one of claims 1 to 12.

## Patentansprüche

1. Tintenstrahltinte, umfassend:
a. mindestens 20 Gewichtsprozent eines Gemisches aus mindestens einem ersten strahlungshärtbaren Monomer und einem zweiten strahlungshärtbaren Monomer, wobei sowohl das erste strahlungshärtbare Monomer wie auch das zweite strahlungshärtbare Monomer einen Schmelzpunkt von mindestens 25°C haben und wobei das Gemisch aus dem ersten und zweiten strahlungshärtbaren Monomer einen Schmelzpunkt von 20°C oder weniger hat;
b. mindestens einen Photoinitiator;
c. mindestens ein Färbungsmittel; und
wobei das erste und zweite strahlungshärtbare Monomer ausgewählt sind aus N-Vinylamiden.

2. Tintenstrahltinte nach Anspruch 1, wobei das erste und das zweite strahlungshärtbare Monomer beide einen Schmelzpunkt von 28°C oder höher, vorzugsweise 30°C oder höher haben.

3. Tintenstrahltinte nach einem vorangehenden Anspruch, wobei das Gemisch einen Schmelzpunkt von 15°C oder weniger hat.

4. Tintenstrahltinte nach einem vorangehenden Anspruch, wobei das Verhältnis von dem ersten strahlungshärtbaren Monomer zu dem zweiten strahlungshärtbaren Monomer 10:90 bis 90:10 Gewichtsteile, vorzugsweise 20:80 bis 80:20, besonders bevorzugt 25:75 bis 75:25 ist.

5. Tintenstrahltinte nach einem vorangehenden Anspruch, wobei die N-Vinylamide N-Vinylcaprolactam (NVC), N-Vinylpiperidon (NVPip) und Divinylethylenharnstoff sind.

6. Tintenstrahltinte nach einem vorangehenden Anspruch, wobei das Gemisch NVC und NVPip oder NVC und Divinylethylenharnstoff umfasst.

7. Tintenstrahltinte nach Anspruch 6, wobei das Gemisch 10 bis 90 Gew% NVC und 10 bis 90 Gew% Divinylethylenharnstoff, basierend auf dem Gesamtgewicht des Gemisches, vorzugsweise 60 bis 85 Gew% NVC und 15 bis 40 Gew% Divinylethylenharnstoff, besonders bevorzugt etwa 75 Gew% NVC und etwa 25% Divinylethylenharnstoff umfasst.

8. Tintenstrahltinte nach Anspruch 6, wobei das Gemisch 10 bis 90 Gew% NVC und 10 bis 90 Gew% NVPip, basierend auf dem Gesamtgewicht des Gemisches, vorzugsweise 30 bis 80 Gew% NVC und 20 bis 70 Gew% NVPip, besonders bevorzugt 35 bis 70 Gew% NVC und 30 bis 65 Gew% NVPip umfasst.

9. Tintenstrahltinte nach einem vorangehenden Anspruch, wobei die Tinte mindestens 50 Gewichtsprozent des Gemisches aus mindestens einem ersten strahlungshärtbaren Monomer und einem zweiten strahlungshärtbaren Monomer, basierend auf dem Gesamtgewicht der Tinte, besonders bevorzugt mindestens 70 Gewichtsprozent umfasst.

10. Tintenstrahltinte nach einem der Ansprüche 1 bis 9, umfassend mindestens ein weiteres strahlungshärtbares monofunktionales Monomer, wobei die Tinte vorzugsweise 5 bis 75 Gew% des weiteren strahlungshärtbaren monofunktionalen Monomers und 20 bis 90 Gew% des Gemisches aus mindestens einem ersten strahlungshärtbaren Monomer und einem zweiten strahlungshärtbaren Monomer, basierend auf dem Gesamtgewicht der Tinte umfasst.

11. Tintenstrahltinte nach Anspruch 10, wobei das weitere strahlungshärtbare monofunktionale Monomer ein (Meth)acrylatmonomer ist, wobei vorzugsweise das weitere monofunktionale (Meth)acrylatmonomer ausgewählt ist aus Phenoxyethylacrylat (PEA), zyklischem TMP-Formalacrylat (CTFA), Isobornylacrylat (IBOA), Tetrahydrofurfurylacrylat (THFA), 2-(2-Ethoxyethoxy)ethylacrylat, Octa/Decylacrylat (ODA), Tridecylacrylat (TDA), Isodecylacrylat (IDA), Laurylacrylat oder Gemischen davon, vorzugsweise PEA.

12. Tintenstrahltinte nach einem vorangehenden Anspruch, wobei die Tinte im Wesentlichen frei von Wasser und flüchtigen organischen Lösemitteln ist.

13. Verfahren zum Tintenstrahldrucken, umfassend das Drucken der Tintenstrahltinte wie in einem der vorangehenden Ansprüche beansprucht, auf ein Substrat und das Härten der Tinte.

14. Substrat mit der aufgedruckten Tintenstrahltinte wie in einem Ansprüche 1 bis 12 beansprucht.

15. Tintenstrahlpatrone, umfassend eine Tintenstrahltinte wie in einem Ansprüche 1 bis 12 beansprucht.

## Revendications

1. Encre pour jet d'encre comprenant:
a. au moins 20 % en poids d'un mélange d'au moins un premier monomère durcissable par rayonnement et un second monomère durcissable par rayonnement, dans laquelle le premier monomère durcissable par rayonnement et le second monomère durcissable par rayonnement ont tous deux un point de fusion d'au moins 25 °C; et dans laquelle le mélange des premier et second monomères durcissables par rayonnement a un point de fusion inférieur ou égal à 20 °C;
b. au moins un photoinitiateur;
c. au moins un agent colorant; et
dans laquelle lesdits premier et second monomères durcissables par rayonnement sont sélectionnés parmi les N-vinylamides.

2. Encre pour jet d'encre selon la revendication 1, dans laquelle les premier et second monomères durcissables par rayonnement ont tous les deux un point de fusion supérieur ou égale à 28 °C, de préférence supérieur ou égal à 30 °C.

3. Encre pour jet d'encre selon l'une quelconque des revendications précédentes, dans laquelle ledit mélange a un point de fusion inférieur ou égal à 15 °C.

4. Encre pour jet d'encre selon l'une quelconque des revendications précédentes, dans laquelle le rapport du premier monomère durcissable par rayonnement au second monomère durcissable par rayonnement est de 10:90 à 90:10 parties en poids, de préférence de 20:80 à 80:20 parties en poids, de manière préférée entre toutes de 25:75 à 75:25.

5. Encre pour jet d'encre selon l'une quelconque des revendications précédentes, dans laquelle lesdits N-vinylamides sont le N-vinylcaprolactame (NVC), la N-vinylpipéridone (NVPip) et la divinyléthylène urée.

6. Encre pour jet d'encre selon l'une quelconque des revendications précédentes, dans laquelle ledit mélange comprend du NVC et de la NVPip ou du NVC et de la divinyléthylène urée.

7. Encre pour jet d'encre selon la revendication 6, dans laquelle ledit mélange comprend de 10 à 90 % en poids de NVC et de 10 à 90 % en poids de divinyléthylène urée par rapport au poids total du mélange, de préférence de 60 à 85 % en poids de NVC et de 15 à 40 % en poids de divinyléthylène urée, de manière préférée entre toutes environ 75 % en poids de NVC et environ 25 % en poids de divinyléthylène urée.

8. Encre pour jet d'encre selon la revendication 6, dans laquelle ledit mélange comprend de 10 à 90 % en poids de NVC et de 10 à 90 % en poids de NVPip par rapport au poids total du mélange, de préférence de 30 à 80 % en poids de NVC et de 20 à 70 % en poids de NVPip, de manière préférée entre toutes de 35 à 70 % en poids de NVC et de 30 à 65 % en poids de NVPip.

9. Encre pour jet d'encre selon l'une quelconque des revendications précédentes, dans laquelle l'encre comprend au moins 50 % en poids dudit mélange d'au moins un premier monomère durcissable par rayonnement et un second monomère durcissable par rayonnement par rapport au poids total de l'encre, plus préférablement au moins 70 % en poids.

10. Encre pour jet d'encre selon l'une quelconque des revendications 1 à 9, comprenant au moins un autre monomère monofonctionnel durcissable par rayonnement, de préférence l'encre comprenant de 5 à 75 % en poids de l'autre monomère monofonctionnel durcissable par rayonnement et de 20 à 90 % en poids du mélange d'au moins un premier monomère durcissable par rayonnement et un second monomère durcissable par rayonnement par rapport au poids total de l'encre.

11. Encre pour jet d'encre selon la revendication 10, dans laquelle ledit autre monomère monofonctionnel durcissable par rayonnement est un monomère de (méth)acrylate, de préférence dans laquelle ledit autre monomère monofonctionnel durcissable par rayonnement est sélectionné parmi l'acrylate de phénoxyéthyle (PEA), l'acrylate de TMP formaldéhyde cyclique (CTFA), l'acrylate d'isobornyle (IBOA), l'acrylate de tétrahydrofurfuryle (THFA), l'acrylate de 2-(2-éthoxyéthoxy)éthyle, l'acrylate d'octa/décyle (ODA), l'acrylate de tridécyle (TDA), l'acrylate d'isodécyle (IDA), l'acrylate de lauryle ou des mélanges de ceux-ci, de préférence le PEA.

12. Encre pour jet d'encre selon l'une quelconque des revendications précédentes, dans laquelle l'encre est sensiblement exempte d'eau et de solvants organiques volatils.

13. Procédé d'impression par jet d'encre, comprenant l'impression de l'encre pour jet d'encre selon l'une quelconque des revendications précédentes sur un substrat et le durcissement de l'encre.

14. Substrat comprenant l'encre pour jet d'encre selon l'une quelconque des revendications 1 à 12 imprimée sur celui-ci.

15. Cartouche pour jet d'encre comprenant une encre pour jet d'encre selon l'une quelconque des revendications 1 à 12.
